# EUROPÄISCHE PATENTSCHRIFT

(11) **EP 3 987 624 B1**
(45) Veröffentlichungstag und Bekanntmachung des Hinweises auf die Patenterteilung: **04.10.2023**
(21) Anmeldenummer: 20725659.5
(22) Anmeldetag: 05.05.2020
(51) Int. Cl.: H02J 3/38

(54) **VERFAHREN ZUR BESTIMMUNG EINER KENNLINIE EINES PHOTOVOLTAIK (PV)-STRINGS, DC/DC-WANDLER UND ZUR DURCHFÜHRUNG DES VERFAHRENS GEEIGNETE PV-ANLAGE**
METHOD FOR DETERMINING A CHARACTERISTIC CURVE OF A PHOTOVOLTAIC (PV) STRING, DC/DC CONVERTER, AND PHOTOVOLTAIC SYSTEM SUITABLE FOR CARRYING OUT THE METHOD
PROCÉDÉ DE DÉTERMINATION D'UNE COURBE CARACTÉRISTIQUE D'UNE CHAÎNE PHOTOVOLTAÏQUE (PV), CONVERTISSEUR CC/CC ET SYSTÈME PV APPROPRIÉ À LA MISE EN OEUVRE DU PROCÉDÉ

(30) Priorität: 18.06.2019 DE 102019116548
(43) Veröffentlichungstag der Anmeldung: 27.04.2022
(73) Patentinhaber: SMA Solar Technology AG, 34266 Niestetal (DE)
(72) Erfinder: VIOTTO, Michael, 34128 Kassel (DE); HOPF, Markus, 34314 Espenau (DE); SCHROPP, Bernhard, 34121 Kassel (DE)
(86) Internationale Anmeldenummer: PCT/EP2020/062424
(87) Internationale Veröffentlichungsnummer: WO 2020/254029

(56) Entgegenhaltungen:
- WO-A1-2015/059548
- DE-A1-102013 112 988
- US-A1- 2011 160 930

## Beschreibung

### Technisches Gebiet der Erfindung

Die Erfindung betrifft ein Verfahren zur Bestimmung einer Kennlinie eines Photovoltaik (PV) - Strings, insbesondere eines zumindest einen DC/DC-Wandler aufweisenden PV-Strings. Die Erfindung betrifft weiterhin einen DC/DC-Wandler, sowie eine PV-Anlage, die zur Durchführung des Verfahrens geeignet ist.

### Stand der Technik

Eine Photovoltaik (PV) - Anlage umfasst als PV-Generator üblicherweise einen oder mehrere PV-Strings, die jeweils eine Reihenschaltung mehrerer PV-Module beinhalten. Wenn einzelne der PV-Module eines PV-Strings verschattet sind, führt dies zu einem Ertragsverlust. Dieser ist nicht nur auf eine reduzierte Leistung der verschatteten PV-Module begrenzt, sondern führt zusätzlich auch zu einem Ertragsverlust für die nicht verschatteten PV-Module innerhalb des PV-Strings.

Um den Ertragsverlust des gesamten PV-Strings im Fall einer Verschattung auf einen Teil der PV-Module zu begrenzen, ist es bekannt, einzelne - gegebenenfalls auch alle - PV-Module des PV-Strings jeweils über einen DC/DC-Wandler - einen sogenannten *Power Optimizer* - in die Reihenschaltung der PV-Module einzubinden. Ein als *Power Optimizer* operierender DC/DC-Wandler sorgt mittels eines eigenen MPP (MPP = Maximum Power Point) Tracking - Verfahrens dafür, dass das eingangsseitig an den DC/DC-Wandler angeschlossene PV-Modul unabhängig von den restlichen PV-Modulen der Reihenschaltung stets in einem Punkt maximaler Leistung betrieben wird. Auf diese Weise bleibt der Ertragsverlust des PV-Strings nur auf die verschatteten PV-Module innerhalb des PV-Strings begrenzt.

Die den einzelnen PV-Modulen zugeordneten DC/DC-Wandler haben mit ihrem MPP-Tracking Verfahren jedoch einen Einfluss auf eine an den Anschlussklemmen des PV-Strings detektierbare Kennlinie (z.B. einer Strom-Spannungs (IU) - Kennlinie und/oder einer Leistungs-Spannungs-(PU) - Kennlinie). So unterscheidet sich eine messbare Kennlinie eines PV-Strings, der derartige DC/DC-Wandler aufweist, von einer realen Kennlinie, wie sie ohne DC/DC-Wandler an den Anschlussklemmen des ansonsten gleichen PV-Strings beobachtbar wäre. Konkret führt beispielsweise das in den DC/DC-Wandlern ablaufende MPP-Tracking zu einem Plateau innerhalb einer Spannungs-Leistungs (PU) - Kennlinie des PV-Strings. Oftmals lassen sich jedoch Fehler in dem PV-String, beispielsweise eine spannungsinduzierte Degradation der PV-Module, aus einer Bestimmung der realen Kennlinie erkennen. Daher kann es unter bestimmten Umständen gewünscht sein, die reale Kennlinie eines einen oder mehrere Power-Optimizer umfassenden PV-Strings detektieren zu können.

Es ist bekannt, dass bei einem DC/DC-Wandler, der mit einem konstanten Übersetzungsverhältnis betrieben wird, eine Strom-Spannungs-Kennlinie einer eingangsseitig an den DC/DC-Wandler angeschlossenen DC-Quelle an einen Ausgang des DC/DC-Wandlers übertragen wird. Dabei hängt eine Skalierung der an den Ausgang übertragenen relativ zu der eingangsseitig vorhandenen Kennlinie der DC-Quelle von dem jeweiligen Übersetzungsverhältnis von Ausgangsspannung U_{Aus} zu Eingangsspannung U_{Ein} des DC/DC-Wandlers ab.

Aus der Schrift WO 2011 082184 A2 ist eine PV-Anlage mit mehreren jeweils einem PV-Modul zugeordneten lokalen DC/DC-Wandlern und einem zentralen DC/AC-Wandler bekannt. Die lokalen DC/DC-Wandler können in einem ersten Betriebsmodus mit einem in den DC/DC-Wandlern ablaufenden MPP-Tracking Verfahren betrieben werden. Alternativ dazu können die DC/DC-Wandler in einem zweiten Betriebsmodus mit einem konstanten Übersetzungsverhältnis von Eingangzu Ausgangsspannung betrieben werden. Vor einem Umschalten von dem ersten in den zweiten Betriebsmodus werden ein dem MPP Arbeitspunkt zugeordneter Wert für einen Tastgrad und ein dem MPP Arbeitspunkt zugeordneter weiterer elektrischer Parameter innerhalb des DC/DC-Wandlers gespeichert. Während nun der DC/DC-Wandler in dem zweiten Betriebsmodus betrieben wird, wird der weitere elektrische Parameter fortlaufend detektiert. Ein Umschalten von dem zweiten Betriebsmodus in den ersten Betriebsmodus erfolgt dann, wenn eine Differenz des detektierten Wertes und des gespeicherten Wertes für den weiteren elektrischen Parameter in dem PV-String einen Schwellwert übersteigt. Bei dem bekannten Verfahren erfolgt ein Umschalten vom ersten in den zweiten Betriebsmodus des DC/DC-Wandler in regelmäßigen Zeitabständen.

Die Druckschrift WO 2015 059548 offenbart eine Solarstromerzeugungsvorrichtung mit einem ersten DC-DC-Wandler, der eingangsseitig an einen Ausgang einer Solarbatterie angeschlossen ist, einer Speicherbatterie, die mit einem Ausgang des ersten DC-DC-Wandlers verbunden ist, einem zweiten DC-DC-Wandler, der eine Spannung der Speicherbatterie umwandelt, und einer Steuereinheit. Die Steuereinheit ändert ein Tastverhältnis des ersten DC-DC-Wandlers, um die Speicherbatterie nicht zu laden, und ein Tastverhältnis des zweiten DC-DC-Wandlers, um einen Arbeitspunkt der Solarbatterie auf einen Punkt maximaler Leistung einzustellen, wenn ein Wert, der einen Ladezustand der Speicherbatterie angibt, gleich oder größer als ein vorbestimmter Wert ist.

Die Druckschrift DE 10 2013 112988 A1 offenbart einen Photovoltaik-Generator, bei dem ein Photovoltaikmodul über einen DC/DC-Wandler mit anderen Photovoltaikmodulen in Reihe geschaltet ist, die eine andere Kennlinie aufweisen als das eine Photovoltaikmodul. Dabei wird dann, wenn die von dem einen Photovoltaikmodul potentiell verfügbare Leistung mindestens so groß ist wie die jeweils von den anderen Photovoltaikmodulen aktuell abgegebene Leistung, der DC/DC-Wandler so betrieben, dass die Kombination des einen Photovoltaikmoduls mit dem DC/DC-Wandler scheinbar dieselbe Kennlinie aufweist wie die anderen Photovoltaikmodule.

### Aufgabe der Erfindung

Der Erfindung liegt die Aufgabe zugrunde, ein Verfahren zur Bestimmung einer Kennlinie eines Photovoltaik (PV) - Strings mit zumindest einem als Power Optimizer operierendem DC/DC-Wandler anzugeben. Dabei soll die Kennlinie diejenige Kennlinie widerspiegeln, die an einem ansonsten gleichen PV-String vorliegt, der jedoch frei von als Power Optimizer operierenden DC/DC-Wandlern ist. Das Verfahren soll es ermöglichen, die Kennlinie insbesondere auch bei Bedarf, beispielsweise zu Zeiten, die verschieden von einem regelmäßig wiederkehrenden Zeitabstand sind, zu bestimmen. Eine Durchführung des Verfahrens soll möglichst einfach und kostengünstig und unter Nutzung einer zentralen Messeinheit erfolgen. Es ist zudem Aufgabe der Erfindung, einen für das Verfahren geeigneten DC/DC-Wandler und eine zur Durchführung des Verfahrens geeignete PV-Anlage aufzuzeigen.

### Lösung

Die Aufgabe, ein Verfahren zur Bestimmung einer Kennlinie bei einem einen DC/DC-Wandler umfassenden PV-String aufzuzeigen, wird erfindungsgemäß mit einem Verfahren mit den Merkmalen des unabhängigen Patentanspruchs 1 gelöst. Vorteilhafte Ausführungsformen des Verfahrens sind in den Ansprüchen 2 bis 10 wiedergegeben. Die Aufgabe, einen für das Verfahren geeigneten DC/DC-Wandler aufzuzeigen, wird erfindungsgemäß mit den Merkmalen des unabhängigen Anspruchs 11 gelöst. Eine vorteilhafte Ausführungsform des DC/DC-Wandlers ist in Anspruch 12 wiedergegeben. Die Aufgabe, eine zur Durchführung des Verfahrens geeignete PV-Anlage aufzuzeigen, wird erfindungsgemäß mit den Merkmalen des unabhängigen Anspruchs 13 gelöst. Vorteilhafte Ausführungsformen der PV-Anlage sind in den Ansprüchen 14 bis 16 genannt.

### Beschreibung der Erfindung

Ein erfindungsgemäßes Verfahren dient einer Bestimmung einer Kennlinie für einen Photovoltaik (PV) - String einer PV-Anlage mit einem Wechselrichter, der eingangsseitig mit dem PV-String und ausgangsseitig mit einem Energieversorgungsnetz (EVN) verbunden ist. Dabei weist der PV-String eine Reihenschaltung mehrerer PV-Module auf, bei der zumindest eines der PV-Module über einen DC/DC-Wandler in die Reihenschaltung der PV-Module eingebunden ist. Der zumindest eine DC/DC-Wandler ist geeignet und eingerichtet, das ihm zugeordnete PV-Modul in einem ersten Betriebsmodus M1 durch eine zeitliche Variation eines Übersetzungsverhältnisses von Ausgangsspannung Uₐᵤₛ zu Eingangsspannung Uₑᵢₙ in einem Punkt maximaler Leistung zu betreiben, und in einem zweiten Betriebsmodus M2 das ihm zugeordnete PV-Modul mit einem zeitlich konstanten Übersetzungsverhältnis von Ausgangsspannung (Uₐᵤₛ) zu Eingangsspannung (Uₑᵢₙ) zu betreiben. Dabei umfasst das Verfahren die Schritte:
- Betreiben des zumindest einen DC/DC-Wandlers in dem zweiten Betriebsmodus M2 in Reaktion auf eine durch den Wechselrichter hervorgerufene Stromsignatur für den Strom I_{Str} durch den PV-String, wobei die Stromsignatur ein dem DC/DC-Wandler als Signal vorbekannter Zeitverlauf für den Strom I_{Str} durch den PV-String ist, und
- Bestimmung der Kennlinie durch Variation des Stroms I_{Str} oder der Spannung U_{Str} des PV-Strings durch den Wechselrichter und Detektion von einander zugeordneten Werten für Strom- I_{Str} und Spannung Ustr des PV-Strings in dem zweiten Betriebsmodus M2 des DC/DC-Wandlers.

Die Stromsignatur kann ein prinzipiell beliebiger, dem DC/DC-Wandler jedoch als Signal vorbekannter Zeitverlauf für den Strom I_{Str} durch den PV-String sein. Die Stromsignatur wird durch den Wechselrichter auf den PV-String aufgeprägt. Das Aufprägen kann beispielsweise durch eine ohnehin in dem Wechselrichter vorhandene induktive oder kapazitive Koppeleinheit erfolgen. Derartige Koppeleinheiten werden beispielsweise zur Erzeugung eines *"Keep-Alive-Signals"* in dem PV-String genutzt. Die Stromsignatur kann jedoch auch durch eine Betriebsweise des Wechselrichters auf den String aufgeprägt werden. Der DC/DC-Wandler ist durch geeignete Mittel zur Strommessung an seinem Ausgang in der Lage, die Stromsignatur zu detektieren. Derartige Mittel zur Strommessung sind in üblichen DC/DC-Wandlern ohnehin vorhanden und stellen daher keinen zusätzlichen Aufwand dar. Die detektierte Stromsignatur wird von dem DC/DC-Wandler als Signal interpretiert, den zweiten Betriebsmodus M2 mit konstantem Übersetzungsverhältnis von Ausgangsspannung U_{Aus} zu Eingangsspannung U_{Ein} einzunehmen und zumindest für eine gewisse Zeitdauer beizubehalten. Dabei kann der DC/DC-Wandler zuvor in dem ersten Betriebsmodus M1 betrieben worden sein, bei dem ein MPP-Tracking des eingangsseitig angeschlossenen PV-Moduls erfolgt. Alternativ ist es jedoch auch möglich, dass der DC/DC-Wandler zuvor in einem deaktivierten Zustand vorlag, bei dem eine Leistungsentnahme aus dem eingangsseitig angeschlossenen PV-Modul unterdrückt wird, und eine Aktivierung des DC/DC-Wandlers unmittelbar mit einem Betrieb in dem zweiten Betriebsmodus M2 einsetzt. Eine Kennlinie des eingangsseitig angeschlossenen PV-Moduls wird in dem zweiten Betriebsmodus M2 am Ausgang des DC/DC-Wandlers messbar, während sie in dem ersten Betriebsmodus M1 des DC/DC-Wandlers durch die zeitliche Variation des Übersetzungsverhältnisses im Rahmen des MPP-Trackings so modifiziert wird, dass die am Ausgang detektierbare Kennlinie für eine weitere Auswertung ungeeignet ist. Während des zweiten Betriebsmodus M2 des DC/DC-Wandlers erfolgt nun eine Variation von Strom I_{Str} oder Spannung U_{Str} innerhalb des PV-Strings durch den Wechselrichter. Beispielsweise wird die Spannung Ustr des PV-Strings von einem Minimalwert bis zur Leerlaufspannung des PV-Strings geändert. Bei dieser Änderung werden einander zugeordnete Werte von Strom I_{Str} und Spannung Ustr durch eine mit dem PV-Strings verbundene Messeinheit detektiert. Auf diese Weise lässt sich die Kennlinie bestimmen, wie sie an dem ansonst gleichen, aber keinen DC/DC-Wandler aufweisenden PV-String vorliegt. Bei der zu bestimmenden Kennlinie kann es sich beispielsweise um eine Strom-Spannungs (IU) - Kennlinie oder einer Leistungs-Spannungs-(PU) - Kennlinie des PV-Strings handeln.

Wenn der PV-String mehrere DC/DC-Wandler aufweist, können alle DC/DC-Wandler des entsprechenden PV-Strings nach Detektion der Stromsignatur für den Strom I_{Str} in dem PV-String ihren zweiten Betriebsmodus M2 einnehmen. Die Stromsignatur kann durch den Wechselrichter bei Bedarf erzeugt werden. Der hierfür notwendige Aufwand beschränkt sich im Wesentlichen auf eine Anpassung einer Betriebssoftware des Wechselrichters. Zusätzliche Komponenten sind nicht, zumindest jedoch nur in überschaubarem Ausmaß notwendig. Auch eine Messeinheit zur Bestimmung der Strom- I_{Str} und Spannungswerte U_{Str} ist innerhalb des Wechselrichters oftmals ohnehin vorhanden. Die DC/DC-Wandler benötigen keine als Sendeeinrichtung ausgelegte Kommunikationseinheit. Zusammenfassend ergibt sich ein einfaches und kostengünstiges Verfahren zur Bestimmung einer Kennlinie für einen PV-String, der mit als Power Optimizer operierenden DC/DC-Wandlern ausgelegt ist.

In einer vorteilhaften Ausführungsform des Verfahrens umfasst die Stromsignatur, dass der Strom I_{Str} in dem PV-String einen Grenzwert I_{GW} unterschreitet. Bevorzugt kann dabei der Strom I_{Str} den Grenzwert I_{GW} für eine erste Zeitdauer Δt₁, unterschreiten. Beispielsweise kann der Wechselrichter den PV-String für die erste Zeitdauer Δt₁ nahe seiner Leerlaufspannung betreiben und hierdurch einen Strom I_{Str} durch den PV-String unterhalb des Grenzwertes I_{Str} < I_{GW} hervorrufen. Dies verhindert eine Fehlinterpretation von ansonsten erfolgenden Stromschwankungen innerhalb des PV-Strings, wie sie beispielsweise wetterbedingt auftreten können.

In einer Variante des Verfahrens kann der zumindest eine DC/DC-Wandler für eine vordefinierte zweite Zeitdauer Δt₂ in dem zweiten Betriebsmodus M2 betrieben werden. Dabei ist die zweite Zeitdauer Δt₂ so gewählt, dass ein vollständiges Abfahren der Kennlinie des PV-Strings ermöglicht wird. Nach Ablauf der zweiten Zeitdauer Δt₂ kann der zumindest eine DC/DC-Wandler selbsttätig den zweiten Betriebsmodus M2 verlassen. Dabei kann der zumindest eine DC/DC-Wandler nach Ablauf der zweiten Zeitdauer Δt₂ in dem ersten Betriebsmodus M1 mit einem innerhalb des DC/DC-Wandlers ablaufenden MPP Tracking Verfahren für das ihm zugeordnete PV-Modul betrieben werden. Alternativ dazu kann er auch - zumindest zeitweise - in einem dritten Betriebsmodus M3 betrieben werden, bei dem eine Leistungsentnahme des dem DC/DC-Wandler zugeordneten PV-Moduls unterdrückt wird.

Bei einer weiteren Ausführungsform des Verfahrens sind mehrere - insbesondere alle - PV-Module des PV-Strings jeweils über einen DC/DC-Wandler in die Reihenschaltung der PV-Module eingebunden. Dabei können in dem zweiten Betriebsmodus M2 alle DC/DC-Wandler innerhalb des entsprechenden PV-Strings mit dem gleichen zeitlich konstanten Übersetzungsverhältnis von Ausgangsspannung Uₐᵤₛ zu Eingangsspannung Uₑᵢₙ betrieben werden. Bevorzugterweise kann der zumindest eine DC/DC-Wandler, insbesondere können alle DC/DC-Wandler innerhalb des PV-Strings während des zweiten Betriebsmodus M2 mit dem zeitlich konstanten Übersetzungsverhältnis vom Wert "1" betrieben werden. Dies erleichtert die Auswertung der Kennlinie, insbesondere in Bezug auf eine nachträgliche Rückskalierung.

In einer weiteren Ausführungsform können den einzelnen DC/DC-Wandlern individuelle Kennungen zugewiesen werden. Dabei kann die Stromsignatur die Kennungen derjenigen DC/DC-Wandler aufweisen, die in den zweiten Betriebsmodus M2 oder aber in den dritten Betriebsmodus M3 versetzt werden sollen. Insbesondere können dann ein Teil der DC/DC Wandler in den Betriebsmodus M2 mit einem festen Übersetzungsverhältnis betrieben werden, während ein anderer Teil der DC/DC Wandler in dem dritten Betriebsmodus M3 betrieben werden, bei dem die Leistungsabgabe durch die PV-Module unterdrückt wird. Auf diese Weise kann dann durch die Messeinrichtung eine Kennlinie aufgezeichnet werden, die sich nur auf die PV-Module bezieht, deren zugeordnete DC/DC Wandler im zweiten Betriebsmodus M2 betrieben werden. Gegebenenfalls kann die Kennlinie noch diejenigen PV-Module des PV-Strings beinhalten, die nicht über einen DC/DC-Wandler in die Reihenschaltung der PV-Module eingebunden sind. Hingegen tragen diejenigen PV-Module, deren DC/DC-Wandler sich im dritten Betriebsmodus M3 befindet, nicht zu der Kennlinienmessung bei. Vielmehr ist eine Leistungsentnahme derjenigen PV-Module, deren zugeordneter DC/DC-Wandler sich im dritten Betriebsmodus M3 befindet, unterdrückt. Auf diese Weise ist die gezielte Analyse lediglich eines Teils des PV-Strings möglich.

Prinzipiell liegt es im Rahmen der Erfindung, dass die Detektion der Werte für Strom I_{Str} und Spannung U_{Str} mittels einer separaten - vorteilhafterweise mobilen - Messeinheit erfolgt, die lediglich bedarfsweise zur Detektion mit den PV-String verbunden werden kann. In einer vorteilhaften Ausführungsform des Verfahrens kann die Detektion der einander zugeordneten Werte für Strom I_{Str} und Spannung U_{Str} zur Bestimmung der Kennlinie durch eine innerhalb des Wechselrichters angeordnete Messeinheit erfolgen. Auf diese Weise können ohnehin in dem Wechselrichter vorhandene Messeinheiten sinnvoll für das Verfahren genutzt werden. In einer weiteren Variante des Verfahrens kann das Übersetzungsverhältnis von Ausgangsspannung Uₐᵤₛ zu Eingangsspannung Uₑᵢₙ für den zumindest einen DC/DC-Wandler - gegebenenfalls für alle DC/DC-Wandler - innerhalb des PV-Strings in dem zweiten Betriebsmodus M2 derart gewählt wird, dass eine Spannung Ustr des PV-Strings innerhalb eines erlaubten Bereiches für eine Eingangsspannung des Wechselrichters liegt. Durch die Wahl des entsprechenden Übersetzungsverhältnisses lässt sich der detektierbare Bereich der Kennlinie beeinflussen. Dies ist insbesondere dann vorteilhaft, wenn die Messeinheit innerhalb des Wechselrichters angeordnet ist und beim Abfahren der Kennlinie ein erlaubter Bereich für eine Eingangsspannung des Wechselrichters nicht verlassen werden sollte.

In einer vorteilhaften Ausführungsform des Verfahrens erfolgt die Erzeugung der Stromsignatur durch den Wechselrichter event- bzw. bedarfsgesteuert. Ein Event kann beispielsweise eine Überprüfung des PV-Strings durch einen Installateur beinhalten. In diesem Fall kann der Installateur den Wechselrichter veranlassen, die Stromsignatur im Bedarfsfall unmittelbar zu erzeugen. Hierfür kann eine Steuerungs-Software des Wechselrichters einen entsprechenden Menü-Punkt aufweisen. Ein Event kann aber auch ein dem Wechselrichter übermittelter oder von dem Wechselrichter detektierter Fehler innerhalb der PV-Anlage sein. Alternativ ist es möglich, dass eine Erzeugung der Stromsignatur durch den Wechselrichter nicht event- sondern zeitgesteuert erfolgt. Hierzu kann eine im Wechselrichter ohnehin vorhandene elektronische Uhr genutzt werden.

Ein erfindungsgemäßer, zur Durchführung des Verfahrens geeigneter DC/DC-Wandler weist einen Eingang zum Anschluss eines PV-Moduls und einem Ausgang zur Verbindung des DC/DC-Wandlers mit weiteren PV-Modulen einer Reihenschaltung von PV-Modulen eines PV-Strings auf. Dabei ist der DC/DC-Wandler ausgelegt und eingerichtet
- in einem ersten Betriebsmodus M1 das ihm zugeordnete eingangsseitig angeschlossene PV-Modul durch eine zeitliche Variation eines Übersetzungsverhältnisses von Ausgangsspannung Uₐᵤₛ zu Eingangsspannung Uₑᵢₙ in einem Punkt maximaler Leistung zu betreiben, und
- in einem zweiten Betriebsmodus M2 das ihm zugeordnete PV-Modul bei einem zeitlich konstanten Übersetzungsverhältnis von Ausgangsspannung Uₐᵤₛ zu Eingangsspannung Uₑᵢₙ zu betreiben. Der DC/DC-Wandler ist dadurch charakterisiert, dass er ferner ausgelegt und eingerichtet, den zweiten Betriebsmodus M2 in Reaktion auf eine Stromsignatur einzunehmen, die in einem über den Ausgang des DC/DC Wandlers fließenden Strom I_{Str} beinhaltet ist und von dem DC/DC-Wandler detektiert wird, wobei die Stromsignatur ein dem DC/DC-Wandler als Signal vorbekannter Zeitverlauf für den Strom I_{Str} durch den PV-String ist. Dabei ist es möglich, dass der DC/DC-Wandler zuvor in dem ersten Betriebsmodus M1 betrieben wurde und in Reaktion auf die Stromsignatur von dem ersten Betriebsmodus M1 in den zweiten Betriebsmodus M2 wechselt. Alternativ dazu ist es jedoch auch möglich, dass der DC/DC-Wandler zuvor in einem deaktivierten Zustand vorlag und eine Aktivierung des DC/DC-Wandlers unmittelbar mit dem Einnehmen des zweiten Betriebsmodus M2 erfolgt. Es ergeben sich die schon im Zusammenhang mit dem Verfahren für den DC/DC-Wandler genannten Vorteile.

Prinzipiell kann der erfindungsgemäße DC/DC-Wandler als Hochsetzsteller, Tiefsetzsteller oder als kombinierter Hoch-Tiefsetzsteller ausgelegt sein. In einer bevorzugten Ausführungsform ist der DC/DC-Wandler jedoch als Tiefsetzsteller ausgelegt.

Eine erfindungsgemäße Photovoltaik (PV) - Anlage umfasst einen PV-Generator mit zumindest einem eine Reihenschaltung mehrerer PV-Module aufweisenden PV-String, und einen Wechselrichter, der eingangsseitig mit dem PV-String und ausgangsseitig mit einem Energieversorgungsnetz (EVN) verbundenen ist. Der Wechselrichter ist ausgelegt und eingerichtet, in Reaktion auf ein Triggersignal eine Stromsignatur in dem PV-String hervorzurufen, und anschließend, insbesondere innerhalb einer zweiten Zeitdauer Δt₂, eine Spannung Ustr des PV-Strings zur Bestimmung einer Kennlinie des PV-Strings zu variieren. Die PV-Anlage umfasst ferner eine Messeinheit zur Detektion von einander zugeordneten Werten für Strom I_{Str} und Spannung U_{Str} des PV-Strings. Die erfindungsgemäße PV-Anlage ist dadurch gekennzeichnet, dass bei dem zumindest einen PV-String zumindest eines der PV-Module über einen erfindungsgemäßen DC/DC-Wandler in die Reihenschaltung der PV-Module eingebunden ist, und die PV-Anlage, insbesondere eine Steuerung der PV-Anlage, zur Durchführung des erfindungsgemäßen Verfahrens ausgelegt und eingerichtet ist. Auch hier ergeben sich die bereits im Zusammenhang mit dem Verfahren genannten Vorteile.

In einer vorteilhaften Ausführungsform der PV-Anlage sind mehrere, insbesondere alle, PV-Module des PV-Strings oder alle PV-Module des PV-Generators über einen erfindungsgemäßen DC/DC-Wandler mit der Reihenschaltung der PV-Module verbunden. In einer weiteren Ausführungsform der PV-Anlage kann die Messeinheit innerhalb des Wechselrichters angeordnet sein. Alternativ ist es jedoch auch möglich, dass die Messeinheit eine separate, insbesondere mobile Messeinheit ist, die nur während der Detektion der einander zugeordneten Strom I_{Str} und Spannungswerte U_{Str} mit dem PV-String der PV-Anlage verbunden ist. Vorteilhafterweise kann die Messeinheit eine Kommunikationseinheit zur Kommunikation der Strom I_{Str} und Spannungswerte Ustr aufweisen oder mit dieser verbunden sein.

### Kurzbeschreibung der Figuren

Im Folgenden wird die Erfindung mithilfe von Figuren dargestellt. Von diesen zeigen
- **Fig. 1**: eine erste Ausführungsform einer erfindungsgemäßen PV-Anlage;
- **Fig. 2**: eine zweite Ausführungsform einer erfindungsgemäßen PV-Anlage; und
- **Fig. 3**: ein Ablaufdiagramm eines erfindungsgemäßen Verfahrens.

### Figurenbeschreibung

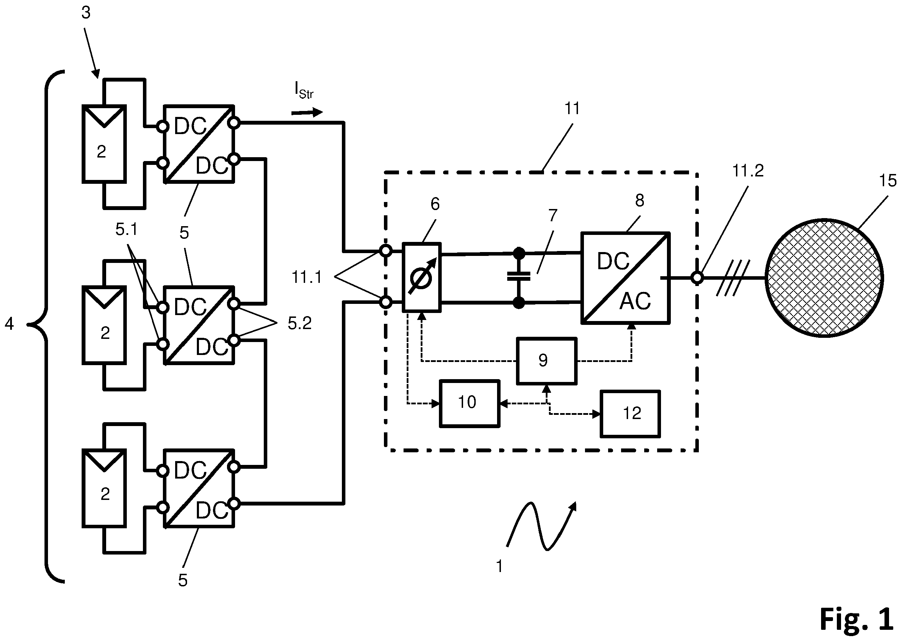

In **Fig. 1** ist eine erste Ausführungsform einer erfindungsgemäßen PV-Anlage 1 dargestellt. Die PV-Anlage 1 umfasst einen PV-Generator 4, der durch einen PV-String 3 gebildet wird. Innerhalb des PV-Strings 3 sind mehrere (hier: exemplarisch drei) PV-Module 2 über eine Reihenschaltung miteinander verbunden. Jedes der PV-Module 2 ist dabei über einen erfindungsgemäßen DC/DC-Wandler 5 in die Reihenschaltung der PV-Module 2 eingebunden. Hierzu weist jeder der DC/DC-Wandler 5 einen Eingang 5.1, an den das dem DC/DC-Wandler 5 zugeordnete PV-Modul 2 angeschlossen ist, und einen Ausgang 5.2 auf. Der PV-String 3 ist mit einem Eingang 11.1 eines Wechselrichters 11 verbunden. Die DC/DC-Wandler 5 sind in einem ersten Betriebsmodus M1 ausgelegt, über eine zeitliche Variation des Übersetzungsverhältnisses von Ausgangsspannung U_{Aus} zu Eingangsspannung U_{Ein} das ihnen zugeordnete PV-Modul 2 unabhängig von den weiteren PV-Modulen 2 des PV-Strings 3 in seinem jeweiligen MPP-Arbeitspunkt zu betreiben. Zusätzlich sind sie in einem zweiten Betriebsmodus M2 dazu ausgelegt, mit einem zeitlich konstanten Übersetzungsverhältnis von Ausgangsspannung U_{Aus} zu Eingangsspannung U_{Ein} betrieben zu werden. Sie sind weiterhin dazu eingerichtet, eine Stromsignatur innerhalb eines über ihren Ausgang 5.2 fließenden Stroms I_{Str} zu detektieren und in Reaktion darauf den zweiten Betriebsmodus M2 anzunehmen.

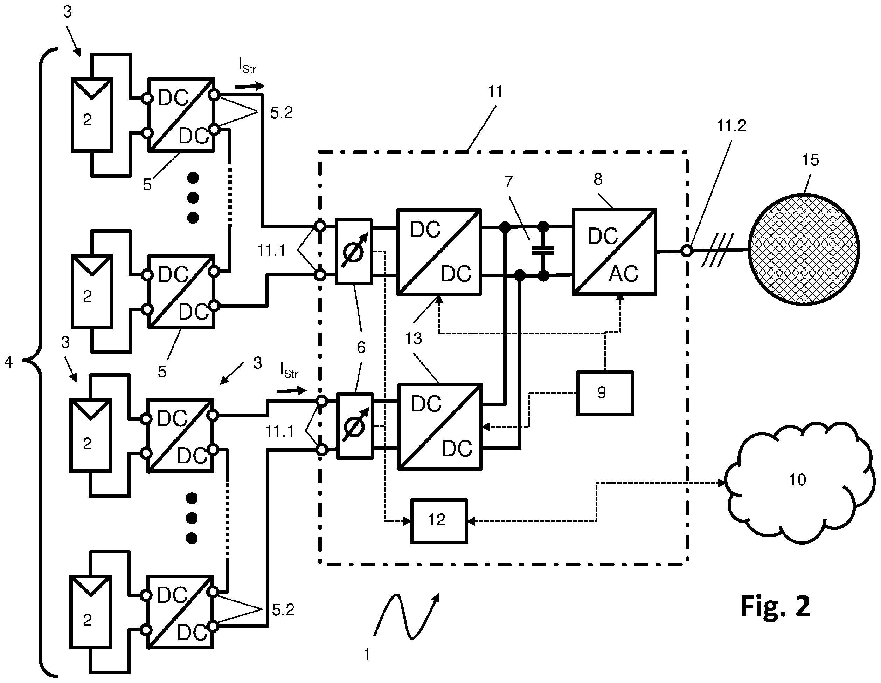

In Fig. 1 ist der Wechselrichter 11 exemplarisch als einstufiger, dreiphasiger Wechselrichter ausgebildet. Alternativ ist es jedoch auch möglich, dass der Wechselrichter 11 eine andere Phasenanzahl an seinem Ausgang 11.2 aufweist und/oder mehrstufig (vgl. Fig. 2) ausgebildet ist. Der Wechselrichter 11 beinhaltet einen DC/AC-Wandler 8 mit einem eingangsseitigen Zwischenkreis 7, sowie eine Steuerungseinheit 9 zur Steuerung des DC/AC-Wandlers 8. Der Wechselrichter 11 beinhaltet zudem eine mit dem Eingang 11.1 verbundene Messeinheit 6, eine Auswerteeinheit 10, und eine Kommunikationseinheit 12. Der Ausgang 11.2 des Wechselrichters 11 ist zur Einspeisung regenerativ erzeugter Energie mit einem Energieversorgungsnetz (EVN) 15 verbunden. Die Messeinheit 6 ist ausgelegt, mehrere elektrische Parameter, beispielsweise einen Strom I_{Str} und eine Spannung U_{Str} des PV-Strings 3 zu detektieren und die detektierten Werte der Auswerteeinheit 10 zu übergeben. Die Auswerteeinheit 10 ist eingerichtet, aus den detektierten Werten eine Kennlinie, beispielsweise eine IU-Kennlinie oder eine PU-Kennlinie auszuwerten. Sie ist zudem in der Lage, die Kennlinie abzuspeichern, sowie eine aktuell gemessene Kennlinie mit einer zuvor ermittelten Kennlinie zu vergleichen. In Figur 1 ist die Auswerteeinheit 10 als separate Komponente dargestellt. Alternativ ist es jedoch auch möglich, dass die Auswerteeinheit 10 integraler Bestandteil der Messeinheit 6 oder der Steuerungseinheit 9 ist. Alternativ kann sie, wie in Fig. 2 dargestellt, auch außerhalb des Wechselrichters angeordnet sein. Die Kommunikationseinheit 12 ist ausgelegt, die detektierten Werte von Strom I_{Str} und Spannung U_{Str}, wie auch weitere Kennliniendaten an eine externe Einheit, beispielsweise ein über das Internet erreichbares Portal, zu kommunizieren. Auf diese Weise kann ein aktueller Zustand der PV-Anlage 1 auch von anderen elektronischen internetfähigen Geräten abgefragt werden. Die Kommunikationseinheit 12 ist zudem eingerichtet, ein Triggersignal von einem externen Kommunikationsgerät, beispielsweise einem Smartphone, zu empfangen und basierend auf dem Triggersignal eine Aufprägung der Stromsignatur auf den Strom I_{Str} durch den PV-String 3 zu initiieren.

Ein Aufprägen der Stromsignatur auf den Strom I_{Str} in dem PV-String 3 kann durch eine in dem Wechselrichter 11 ohnehin vorhandene induktiv oder kapazitiv operierende Koppeleinheit (in Fig. 1 nicht dargestellt) erfolgen. Solche Koppeleinheiten werden beispielsweise zur Erzeugung eines *"Keep-Alive-Signals"* verwendet, um den PV-Generator 4 im normalen Einspeisebetrieb der PV-Anlage 1 in einem aktivierten Betriebszustand zu belassen, bei dem eine Leistungsentnahme aus dem PV-Generator erfolgt, und im Gefahrenfall (Wegfall des *"Keep-Alive-Signals"*) durch Öffnen einer generatornahen Trenneinheit oder Schließen einer generatornahen Kurzschlusseinheit in einen sicheren Zustand zu überführen, bei dem eine Leistungsentnahme aus dem PV-Generator unterdrückt wird. Alternativ ist es jedoch auch möglich, dass der DC/AC-Wandler 8 den PV-String 3 während einer ersten Zeitdauer Δt₁ in einem leerlaufnahen Arbeitspunkt betreibt und so in dem PV-String 3 einen Strom I_{Str} unterhalb eines Grenzwertes I_{GW} hervorruft.

In **Fig. 2** ist eine zweite Ausführungsform der erfindungsgemäßen PV-Anlage 1 dargestellt. Sie gleicht in vielen Aspekten der bereits in Fig. 1 dargestellten ersten Ausführungsform. Im Folgenden werden daher lediglich die Unterschiede zur ersten Ausführungsform erklärt, während im Hinblick auf die gleichen Merkmale auf die Beschreibung der Fig. 1 verwiesen wird.

Die in Fig. 2 illustrierte PV-Anlage 1 beinhaltet einen PV-Generator 4 mit mehreren (hier: zwei) PV-Strings 3. Jeder der PV-Strings 3 ist an einen separaten Eingang 11.1 eines zweistufigen Wechselrichters 11 angeschlossen. In ihrem Aufbau gleichen die PV-Strings 3 dem PV-String 3 der in Fig. 1 dargestellten PV-Anlage 1. Jedes der PV-Module 2 ist über einen DC/DC-Wandler 5 in die Reihenschaltung der PV-Module 2 eingebunden. Die Anzahl der PV-Module 2, wie auch der DC/DC-Wandler 5 beider PV-Strings 3 des PV-Generators 4 können sich jedoch voneinander unterscheiden. In Fig. 2 ist der Wechselrichter 11 als sogenannter Multi-String-Wechselrichter ausgebildet, bei dem jeder der Eingänge 11.1 über einen DC/DC-Wandler 13 mit einem gemeinsamen DC-Zwischenkreis 7 verbunden ist. Der gemeinsame DC-Zwischenkreis 7 ist an einen Eingang des DC/AC-Wandlers 8 angeschlossen. Jeder der DC/DC-Wandler 13 ist ausgelegt, eine Spannung U_{Str} oder einen Strom I_{Str} des mit ihm verbundenen PV-Strings 3 zur Bestimmung einer Kennlinie zu variieren. Zudem ist jeder der DC/DC-Wandler 13 ausgelegt und eingerichtet, dem ihm zugeordneten PV-String 3 eine Stromsignatur aufzuprägen. Dies kann beispielsweise dadurch erfolgen, dass der DC/DC-Wandler 13 den PV-String für eine erste Zeitdauer Δt₁ bei seiner Leerlaufspannung betreibt. Hierzu ist eine Steuerung 9 des Wechselrichters 11 sowohl mit dem DC/AC-Wandler 8 als auch mit den beiden DC/DC-Wandlern 13 steuerungstechnisch verbunden. Jeder der als Power Optimizer operierenden DC/DC-Wandler 5 des PV-Strings 3 ist hingegen ausgelegt und eingerichtet, die Stromsignatur in dem über seinen Ausgang 5.2 fließenden Strom zu detektieren und in Reaktion auf die detektierte Stromsignatur den zweiten Betriebsmodus M2 einzunehmen. Zur Detektion von Strom I_{Str} und Spannungswerten U_{Str} ist jeder der Eingänge 11.1 mit einer Messeinheit 6 verbunden. Die Messeinheiten 6 sind zur Kommunikation der detektierten Strom- I_{Str} und Spannungswerte U_{Str} mit einer Kommunikationseinheit 12 verbunden, die die Werte an eine externe Auswerteeinheit 10 übermittelt. Bei der externen Auswerteeinheit 10 kann es sich beispielsweise um ein internetbasiertes Portal handeln, welches Daten mehrerer PV-Anlagen aggregiert, um sie für Qualitätsaussagen miteinander zu vergleichen. Auch hier ist der Wechselrichter 11 über einen Ausgang 11.2 mit einem Energieversorgungsnetz 15 verbunden.

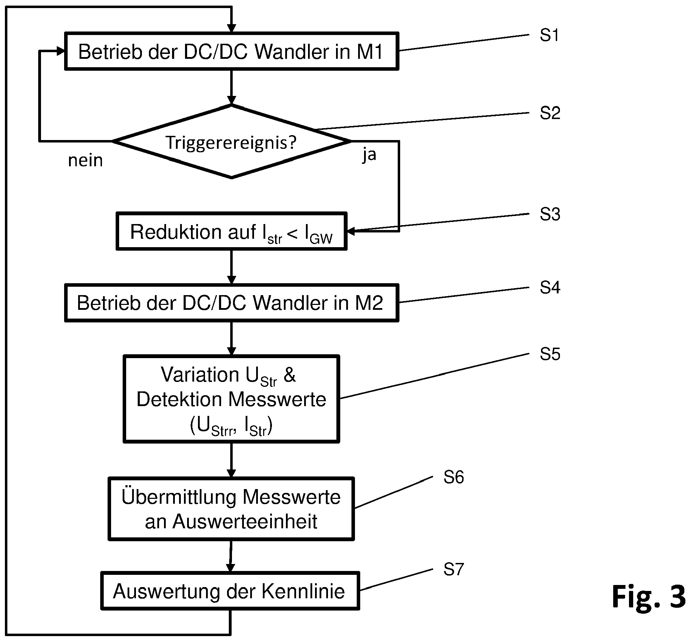

In **Fig. 3** ist ein Ablaufdiagramm eines erfindungsgemäßen Verfahrens dargestellt, wie es z.B. mit der PV-Anlage 1 aus Fig. 1 oder der PV-Anlage 1 aus Fig. 2 durchgeführt werden kann.

In einem ersten Schritt S1 befindet sich die PV-Anlage 1 in einem normalen Einspeisebetrieb, und die DC/DC-Wandler 5 innerhalb des PV-Strings 3 operieren im ersten Betriebsmodus M1. Die den DC/DC-Wandlern 5 jeweils zugeordneten PV-Module 2 werden hier in einem Punkt maximaler Leistung (MPP) betrieben. In einem Schritt S2 wird abgefragt, ob der Wechselrichter 11 ein Triggerereignis erhalten hat. Ein derartiges Triggerereignis kann beispielsweise über ein externes Kommunikationsgerät - z.B. ein Smartphone - dem Wechselrichter 11 über dessen Kommunikationseinheit 12 übermittelt werden. Alternativ kann das Triggerereignis jedoch auch zeitgesteuert, z.B. durch eine innerhalb des Wechselrichters 11 implementierte elektronische Uhr generiert werden. Liegt kein Triggerereignis vor, springt das Verfahren zum Schritt S1 zurück. Liegt hingegen ein Trägerereignis vor, so springt das Verfahren zu einem Schritt S3, bei dem durch den Wechselrichter 11 eine Stromsignatur in dem PV-String 3 hervorgerufen wird. In dem illustrierten Fall wird der PV-String 3 während einer ersten Zeitdauer Δt₁ in einem leerlaufnahen Arbeitspunkt betrieben. Der Wechselrichter 11 erzeugt so für die erste Zeitdauer Δt₁ einen Strom I_{Str} durch den PV-String 3 unterhalb eines Grenzwertes I_{GW}, mit I_{Str} < I_{GW}. Die DC/DC-Wandler 5 in dem PV-String 3 detektieren die Stromsignatur in dem über ihren Ausgang 5.2 fließenden Strom I_{Str}. In Reaktion darauf nehmen sie in einem Schritt S4 den zweiten Betriebsmodus M2 mit einem konstanten Übersetzungsverhältnis von Ausgangsspannung U_{Aus} zu Eingangsspannung U_{Ein} ein und behalten diesen für eine zweite Zeitdauer Δt₂ bei. In einem Schritt S5 variiert der Wechselrichter 11 während der zweiten Zeitdauer Δt₂ - entweder über den DC/AC-Wandler 8 (bei der PV-Anlage in Fig. 1) oder über einen der DC/DC-Wandler 13 (bei der PV-Anlage in Fig. 2) - die Spannung Ustr oder den Strom I_{Str} des PV-Strings 3. Während der Variation werden einander zugeordnete Werte von Strom I_{Str} und Spannung U_{Str} des PV-Strings durch die Messeinheit 6 detektiert. Nach Ablauf der zweiten Zeitdauer Δt₂ ist die Detektion der Werte von Strom I_{Str} und Spannung Ustr abgeschlossen.. Zusätzlich erfolgt in einem Schritt S6 eine Übermittlung der detektierten Werte von Strom I_{Str} und Spannung U_{Str} an die Auswerteeinheit 10, die daraus in einem Schritt S7 die Kennlinie des PV-Strings 3 und gegebenenfalls weitere den PV-String 3 auswertet, insbesondere charakterisierende Kennwerte ermittelt. Optional können die Kennwerte, wie auch die detektierten Werte von Strom I_{Str} und Spannung U_{Str}, an eine weitere externe Auswerteeinheit, beispielsweise ein internetbasiertes Portal, übermittelt werden. Das Verfahren springt anschließend zum Schritt S1 zurück, bei dem die DC/DC-Wandler 5 wieder im ersten Betriebsmodus M1 betrieben werden

### Bezugszeichenliste

- 1: PV-Anlage
- 2: PV-Modul
- 3: PV-String
- 4: PV-Generator
- 5: DC/DC-Wandler
- 5.1: Eingang
- 5.2: Ausgang
- 6: Messeinheit
- 7: DC - Zwischenkreis
- 8: DC/AC-Wandler
- 9: Steuerung
- 10: Auswerteeinheit
- 11: Wechselrichter
- 11.1: Eingang
- 11.2: Ausgang
- 12: Kommunikationseinheit
- 13: DC/DC-Wandler
- 15: Energieversorgungsnetz (EVN)

- M1,M2, M3: Betriebsmodus
- S1 - S7: Verfahrensschritt

## Patentansprüche

1. Verfahren zur Bestimmung einer Kennlinie für einen Photovoltaik (PV) - String (3) einer PV-Anlage (1) mit einem Wechselrichter (11), der eingangsseitig mit dem PV-String (3) und ausgangsseitig mit einem Energieversorgungsnetz (15, EVN) verbunden ist,
- wobei der PV-String (3) eine Reihenschaltung mehrerer PV-Module (2) aufweist, bei der zumindest eines der PV-Module (2) über einen DC/DC-Wandler (5) in die Reihenschaltung der PV-Module (2) eingebunden ist,
- wobei der zumindest eine DC/DC-Wandler (5) geeignet und eingerichtet ist, das ihm zugeordnete PV-Modul (2) in einem ersten Betriebsmodus M1 durch eine zeitliche Variation eines Übersetzungsverhältnisses von Ausgangsspannung (Uₐᵤₛ) zu Eingangsspannung (Uₑᵢₙ) in einem Punkt maximaler Leistung zu betreiben, und in einem zweiten Betriebsmodus M2 das ihm zugeordnete PV-Modul (2) mit einem zeitlich konstanten Übersetzungsverhältnis von Ausgangsspannung (Uₐᵤₛ) zu Eingangsspannung (Uₑᵢₙ) zu betreiben,
mit den Schritten:
- Betreiben des zumindest einen DC/DC Wandlers (5) in dem zweiten Betriebsmodus M2 in Reaktion auf eine durch den Wechselrichter (11) hervorgerufene Stromsignatur für den Strom (I_{Str}) durch den PV-String (3), wobei die Stromsignatur ein dem DC/DC-Wandler (5) als Signal vorbekannter Zeitverlauf für den Strom I_{Str} durch den PV-String ist, und
- Bestimmung der Kennlinie durch Variation des Stroms I_{Str} oder der Spannung U_{Str} des PV-Strings (2) durch den Wechselrichter (11) und Detektion von einander zugeordneten Werten für Strom- I_{Str} und Spannung Ustr des PV-Strings (3) in dem zweiten Betriebsmodus M2 des DC/DC-Wandlers (5).

2. Verfahren nach Anspruch 1, wobei die Detektion der einander zugeordneten Werte für Strom (I_{Str}) und Spannung (U_{Str}) zur Bestimmung der Kennlinie durch eine innerhalb des Wechselrichters (11) angeordnete Messeinheit (6) erfolgt.

3. Verfahren nach Anspruch 1 oder 2, wobei die Stromsignatur umfasst, dass der PV-String (3), optional für eine erste Zeitdauer Δt₁, mit einem Strom I_{Str} durch den PV-String (3) unterhalb eines Grenzwertes I_{Str} < I_{GW} betrieben wird.

4. Verfahren nach einem der vorangehenden Ansprüche, wobei der zumindest eine DC/DC-Wandler (5) für eine vordefinierte zweite Zeitdauer Δt₂ in dem zweiten Betriebsmodus M2 betrieben wird.

5. Verfahren nach einem der vorangehenden Ansprüche, wobei die durch den Wechselrichter (11) hervorgerufene Stromsignatur zeitgesteuert oder eventgesteuert getriggert wird.

6. Verfahren nach Anspruch 4, wobei der zumindest eine DC/DC-Wandler (5) nach Ablauf der zweiten Zeitdauer Δt₂ in dem ersten Betriebsmodus M1 oder zumindest zeitweise in einem dritten Betriebsmodus M3 betrieben wird, bei dem eine Leistungsentnahme des dem DC/DC-Wandler (5) zugeordneten PV-Moduls (2) unterdrückt wird.

7. Verfahren nach einem der vorangehenden Ansprüche, wobei mehrere - insbesondere alle - PV-Module (2) des PV-Strings (3) jeweils über einen DC/DC-Wandler (5) in die Reihenschaltung der PV-Module (2) eingebunden sind und wobei in dem zweiten Betriebsmodus M2 alle DC/DC-Wandler (5) innerhalb des PV-Strings (3) mit dem gleichen zeitlich konstanten Übersetzungsverhältnis von Ausgangsspannung (Uₐᵤₛ) zu Eingangsspannung (Uₑᵢₙ) betrieben werden.

8. Verfahren nach einem der vorangehenden Ansprüche, wobei der zumindest eine DC/DC-Wandler (5), insbesondere alle DC/DC-Wandler (5) innerhalb des PV-Strings (3) in dem zweiten Betriebsmodus M2 mit dem zeitlich konstanten Übersetzungsverhältnis vom Wert "1" betrieben werden.

9. Verfahren nach einem der vorangehenden Ansprüche, wobei das Übersetzungsverhältnis von Ausgangsspannung (Uₐᵤₛ) zu Eingangsspannung (Uₑᵢₙ) für den zumindest einen DC/DC-Wandler (5) - insbesondere für alle DC/DC-Wandler (5) innerhalb des PV-Strings (3) - in dem zweiten Betriebsmodus M2 derart gewählt wird, dass eine Spannung Ustr des PV-Strings (3) innerhalb eines erlaubten Bereiches für eine Eingangsspannung des Wechselrichters (11) liegt.

10. Verfahren nach einem der vorangehenden Ansprüche, wobei die Stromsignatur eine individuelle Kennung einzelner DC/DC-Wandler (5) des PV-Strings (3) enthält, wobei nur die einzelnen DC/DC-Wandler (5) in den zweiten Betriebszustand M2 und die restlichen DC/DC-Wandler (5) des PV-Strings in einen eine Leistungsentnahme des zugeordneten PV-Moduls (2) unterdrückenden dritten Betriebszustand M3 versetzt werden, oder wobei nur die einzelnen DC/DC-Wandler (5) in den eine Leistungsentnahme des zugeordneten PV-Moduls (2) unterdrückenden dritten Betriebszustand M3 und die restlichen DC/DC-Wandler (5) des PV-Strings (3) in den zweiten Betriebszustand M2 versetzt werden.

11. DC/DC-Wandler (5) mit einem Eingang (5.1) zum Anschluss eines PV-Moduls (2) und einem Ausgang (5.2) zur Verbindung des DC/DC-Wandlers (5) mit weiteren PV-Modulen (2) einer Reihenschaltung von PV-Modulen (2) eines PV-Strings (3), wobei der DC/DC-Wandler (5) ausgelegt und eingerichtet ist
- in einem ersten Betriebsmodus M1 das ihm zugeordnete PV-Modul (2) durch eine zeitliche Variation eines Übersetzungsverhältnisses von Ausgangsspannung (Uₐᵤₛ) zu Eingangsspannung (Uₑᵢₙ) in einem Punkt maximaler Leistung zu betreiben, und
- in einem zweiten Betriebsmodus M2 das ihm zugeordnete PV-Modul (2) bei einem zeitlich konstanten Übersetzungsverhältnis von Ausgangsspannung (Uₐᵤₛ) zu Eingangsspannung (Uₑᵢₙ) zu betreiben, **dadurch gekennzeichnet, dass** der DC/DC-Wandler (5) weiterhin ausgelegt und eingerichtet ist,
- den zweiten Betriebsmodus M2 in Reaktion auf eine Stromsignatur einzunehmen, die in einem über den Ausgang (5.2) des DC/DC Wandlers (5) fließenden Strom I_{Str} enthalten ist, wobei die Stromsignatur ein dem DC/DC-Wandler (5) als Signal vorbekannter Zeitverlauf für den Strom I_{Str} durch den PV-String (3) ist.

12. DC/DC-Wandler (5) nach Anspruch 11, **dadurch gekennzeichnet, dass** der DC/DC-Wandler als Tiefsetzsteller ausgelegt ist.

13. Photovoltaik (PV) - Anlage (1) umfassend:
- einen PV-Generator (4) mit zumindest einem eine Reihenschaltung mehrerer PV-Module (2) aufweisenden PV-String (3),
- einem Wechselrichter (11), der eingangsseitig mit dem PV-String (3) und ausgangsseitig mit einem Energieversorgungsnetz (15, EVN) verbundenen ist, wobei der Wechselrichter (11) ausgelegt und eingerichtet ist,
▪ in Reaktion auf ein Triggersignal eine Stromsignatur in dem PV-String (3) hervorzurufen, und
▪ anschließend, insbesondere innerhalb einer zweiten Zeitdauer Δt₂, eine Spannung U_{Str} des PV-String (3) zur Bestimmung einer Kennlinie des PV-Strings (3) zu variieren,
- eine Messeinheit (6) zur Detektion von einander zugeordneten Werten für Strom I_{Str} und Spannung U_{Str} des PV-Strings (3),
**dadurch gekennzeichnet, dass** bei dem zumindest einen PV-String (3) zumindest eines der PV-Module (2) über einen DC/DC-Wandler (5) nach einem der Ansprüche 11 und 12 in die Reihenschaltung der PV-Module (2) eingebunden ist, und die PV-Anlage (1) zur Durchführung des Verfahrens nach einem der Ansprüche 1 bis 10 ausgelegt und eingerichtet ist.

14. PV-Anlage (1) nach Anspruch 13, **dadurch gekennzeichnet, dass** mehrere, insbesondere alle PV-Module (2) des PV-Strings (3) oder alle PV-Module (2) des PV-Generators (4) über einen DC/DC-Wandler (5) nach Anspruch 11 0 oder 12 mit der Reihenschaltung der PV-Module (2) verbunden sind.

15. PV-Anlage (1) nach einem der Ansprüche 13 und 14, **dadurch gekennzeichnet, dass** die Messeinheit (6) innerhalb des Wechselrichters (11) angeordnet ist.

16. PV-Anlage (1) nach einem der Ansprüche 13 bis 15, **dadurch gekennzeichnet, dass** die Messeinheit (6) eine Kommunikationseinheit (12) zur Kommunikation der Strom- I_{Str} und Spannungswerte U_{Str} aufweist oder mit dieser verbunden ist.

## Claims

1. Method for determining a characteristic curve for a photovoltaic (PV) string (3) of a PV system (1) having an inverter (11), which is connected to the PV string (3) on the input side and to a power supply network (15, PSN) on the output side,
- wherein the PV string (3) comprises a series connection of multiple PV modules (2), in which at least one of the PV modules (2) is integrated into the series connection of the PV modules (2) via a DC/DC converter (5),
- wherein the at least one DC/DC converter (5) is designed and configured to operate the PV module (2) assigned thereto in a first operating mode M1 by temporal variation of a conversion ratio of output voltage (U_{Out}) to input voltage (U_{In}) at a maximum power point, and, in a second operating mode M2, to operate the PV module (2) assigned thereto with a temporally constant conversion ratio of output voltage (U_{Out}) to input voltage (U_{In}),
comprising the steps of:
- operating the at least one DC/DC converter (5) in the second operating mode M2 in response to a current signature for the current (Istr) through the PV string (3), which current signature is produced by the inverter (11), wherein the current signature is a time characteristic for the current I_{Str} through the PV string, that is previously known to the DC/DC converter (5) as a signal, and
- determining the characteristic curve by variation of the current I_{Str} or the voltage U_{Str} of the PV string (2) by the inverter (11) and detecting values assigned to one another for current I_{Str} and voltage U_{Str} of the PV string (3) in the second operating mode M2 of the DC/DC converter (5).

2. Method according to Claim 1, wherein the detection of the values assigned to one another for current (I_{Str}) and voltage (U_{Str}) for determining the characteristic curve is carried out by a measurement unit (6) arranged within the inverter (11).

3. Method according to Claim 1 or 2, wherein the current signature comprises the PV string (3) being operated with a current I_{Str} through the PV string (3) below a limit value I_{Str} < I_{LV}, optionally for a first time period Δt₁.

4. Method according to one of the preceding claims, wherein the at least one DC/DC converter (5) is operated in the second operating mode M2 for a predefined second time period Δt₂.

5. Method according to one of the preceding claims, wherein the current signature produced by the inverter (11) is triggered in a time-controlled or event-controlled manner.

6. Method according to Claim 4, wherein, after the second time period Δt₂ has elapsed, the at least one DC/DC converter (5) is operated in the first operating mode M1 or at least temporarily in a third operating mode M3, in which a power draw of the PV module (2) assigned to the DC/DC converter (5) is suppressed.

7. Method according to one of the preceding claims, wherein several, in particular all, PV modules (2) of the PV string (3) are each integrated into the series connection of the PV modules (2) via a DC/DC converter (5), and wherein, in the second operating mode M2, all DC/DC converters (5) within the PV string (3) are operated with the same temporally constant conversion ratio of output voltage (U_{Out}) to input voltage (U_{In}).

8. Method according to one of the preceding claims, wherein the at least one DC/DC converter (5), in particular all DC/DC converters (5), within the PV string (3) are operated with the temporally constant conversion ratio of the value "1" in the second operating mode M2.

9. Method according to one of the preceding claims, wherein the conversion ratio of output voltage (U_{Out}) to input voltage (U_{In}) for the at least one DC/DC converter (5), in particular for all DC/DC converters (5) within the PV string (3), is selected in the second operating mode M2 in such a way that a voltage U_{Str} of the PV string (3) is within a permitted range for an input voltage of the inverter (11).

10. Method according to one of the preceding claims, wherein the current signature contains an individual identifier of individual DC/DC converters (5) of the PV string (3), wherein only the individual DC/DC converters (5) are put into the second operating state M2, and the remaining DC/DC converters (5) of the PV string are put into a third operating state M3 that suppresses a power draw of the assigned PV module (2), or wherein only the individual DC/DC converters (5) are put into the third operating state M3 that suppresses a power draw of the assigned PV module (2), and the remaining DC/DC converters (5) of the PV string (3) are put into the second operating state M2.

11. DC/DC converter (5) having an input (5.1) for connecting a PV module (2) and an output (5.2) for connecting the DC/DC converter (5) to further PV modules (2) of a series connection of PV modules (2), wherein the DC/DC converter (5) is designed and configured,
- in a first operating mode M1, to operate the PV module (2) assigned thereto by temporal variation of a conversion ratio of output voltage (U_{Out}) to input voltage (U_{In}) at a maximum power point, and,
- in a second operating mode M2, to operate the PV module (2) assigned thereto at a temporally constant conversion ratio of output voltage (U_{Out}) to input voltage (U_{In}), **characterized in that** the DC/DC-converter (5) is further designed and configured,
- to assume the second operating mode M2 in response to a current signature contained in a current I_{Str} flowing via the output (5.2) of the DC/DC converter (5), wherein the current signature is a time characteristic for the current I_{Str} through the PV string (3), that is previously known to the DC/DC converter (5) as a signal.

12. DC/DC converter (5) according to Claim 11, **characterized in that** the DC/DC converter is designed as a buck converter.

13. Photovoltaic (PV) system (1) comprising:
- a PV generator (4) having at least one PV string (3) comprising a series connection of several PV modules (2),
- an inverter (11) connected on the input side to the PV string (3) and on the output side to a power supply network (15, PSN), wherein the inverter (11) is designed and configured
▪ to produce a current signature in the PV string (3) in response to a trigger signal, and
▪ to subsequently vary, in particular within a second time period Δt₂, a voltage U_{Str} of the PV string (3) in order to determine a characteristic curve of the PV string (3),
- a measurement unit (6) for detecting values assigned to one another for current I_{Str} and voltage U_{Str} of the PV string (3),
**characterized in that,** in the at least one PV string (3), at least one of the PV modules (2) is integrated into the series connection of the PV modules (2) via a DC/DC converter (5) according to one of Claims 11 and 12, and the PV system (1) is designed and configured to carry out the method according to one of Claims 1 through 10.

14. PV system (1) according to Claim 13, **characterized in that** several, in particular all, PV modules (2) of the PV string (3) or all PV modules (2) of the PV generator (4) are connected to the series connection of the PV modules (2) via a DC/DC converter (5) according to Claim 11 or 12.

15. PV system (1) according to one of Claims 13 and 14, **characterized in that** the measurement unit (6) is arranged within the inverter (11).

16. PV system (1) according to one of Claims 13 through 15, **characterized in that** the measurement unit (6) comprises or is connected to a communications unit (12) for communicating the current values I_{Str} and voltage values U_{Str}.

## Revendications

1. Procédé pour déterminer une courbe caractéristique pour une chaîne photovoltaïque (PV) (3) d'une installation PV (1) avec un onduleur (11), qui est relié côté entrée à la chaîne PV (3) et côté sortie à un réseau d'alimentation en énergie (15, EVN),
▪ la chaîne PV (3) présentant un montage en série de plusieurs modules PV (2), dans lequel au moins l'un des modules PV (2) est intégré dans le montage en série des modules PV (2) via un convertisseur DC/DC (5),
- dans lequel au moins le convertisseur DC/DC (5) est approprié et configuré pour exploiter, dans un premier mode d'exploitation M1, le module PV (2) qui lui est associé par une variation dans le temps d'un rapport de transformation de la tension de sortie (Uₐᵤₛ) à la tension d'entrée (Uₑᵢₙ) en un point de puissance maximale et pour exploiter, dans un deuxième mode d'exploitation M2, le module PV (2) qui lui est associé avec un rapport de transformation constant dans le temps de la tension de sortie (Uₐᵤₛ) à la tension d'entrée (Uₑᵢₙ), avec les étapes suivantes:
- Exploitation au moins du convertisseur DC/DC (5) dans le deuxième mode d'exploitation M2 en réponse à une signature de courant provoquée par l'onduleur (11) pour le courant (I_{Str}) traversant la chaîne PV (3), la signature de courant étant une courbe temporelle connue du convertisseur DC/DC (5) au préalable sous forme de signal pour le courant Istr traversant la chaîne PV, et
- Détermination de la courbe caractéristique en faisant varier le courant Istr ou la tension U_{Str} de la chaîne PV (2) par l'onduleur (11) et en détectant des valeurs mutuellement attribuées pour le courant Istr et la tension U_{Str} de la chaîne PV (3) dans le deuxième mode d'exploitation M2 du convertisseur DC/DC (5).

2. Procédé selon la revendication 1, dans lequel la détection des valeurs mutuellement attribuées du courant (I_{Str}) et de la tension (U_{Str}) pour déterminer la courbe caractéristique est effectuée par une unité de mesure (6) disposée à l'intérieur de l'onduleur (11).

3. Procédé selon la revendication 1 ou 2, dans lequel la signature de courant comprend l'exploitation de la chaîne PV (3), éventuellement pendant une première durée Δt₁, avec un courant I_{Str} traversant la chaîne PV (3) inférieur à une valeur limite I_{Str} < I_{GW}.

4. Procédé selon l'une des revendications précédentes, dans lequel au moins le convertisseur DC/DC (5) est exploité dans le deuxième mode d'exploitation M2 pendant une deuxième durée prédéfinie Δt₂.

5. Procédé selon l'une des revendications précédentes, dans lequel la signature de courant provoquée par l'onduleur (11) est déclenchée en fonction du temps ou en fonction d'un événement.

6. Procédé selon la revendication 4, dans lequel au moins le convertisseur DC/DC (5) est exploité après l'écoulement de la deuxième durée Δt₂ dans le premier mode d'exploitation M1 ou, au moins temporairement, dans un troisième mode d'exploitation M3, dans lequel un prélèvement de puissance du module PV (2) associé au convertisseur DC/DC (5) est supprimé.

7. Procédé selon l'une des revendications précédentes, dans lequel plusieurs - en particulier tous - les modules PV (2) de la chaîne PV (3) sont respectivement intégrés dans le montage en série des modules PV (2) par l'intermédiaire d'un convertisseur DC/DC (5) et dans lequel, dans le deuxième mode d'exploitation M2, tous les convertisseurs DC/DC (5) à l'intérieur de la chaîne PV (3) sont exploités avec le même rapport de transformation constant dans le temps de la tension de sortie (Uₐᵤₛ) à la tension d'entrée (Uₑᵢₙ).

8. Procédé selon l'une des revendications précédentes, dans lequel au moins le convertisseur DC/DC (5), en particulier tous les convertisseurs DC/DC (5) à l'intérieur de la chaîne PV (3), sont exploités dans le deuxième mode d'exploitation M2 avec le rapport de transformation constant dans le temps de la valeur « 1 ».

9. Procédé selon l'une des revendications précédentes, dans lequel le rapport de transformation de la tension de sortie (Uₐᵤₛ) à la tension d'entrée (Uₑᵢₙ) pour au moins le convertisseur DC/DC (5) - en particulier pour tous les convertisseurs DC/DC (5) à l'intérieur de la chaîne PV (3) - est choisi dans le deuxième mode d'exploitation M2 de telle sorte qu'une tension U_{Str} de la chaîne PV (3) se situe dans une plage autorisée pour une tension d'entrée de l'onduleur (11).

10. Procédé selon l'une des revendications précédentes, dans lequel la signature de courant contient un identifiant individuel des différents convertisseurs DC/DC (5) de la chaîne PV (3), dans lequel seuls les différents convertisseurs DC/DC (5) sont placés dans le deuxième mode d'exploitation M2 et les autres convertisseurs DC/DC (5) de la chaîne PV sont placés dans un troisième mode d'exploitation M3, qui supprime un prélèvement de puissance du module PV (2) associé, ou dans lequel seuls les différents convertisseurs DC/DC (5) sont placés dans le troisième état d'exploitation M3, qui supprime un prélèvement de puissance du module PV (2) associé, et les autres convertisseurs DC/DC (5) de la chaîne PV (3) sont placés dans le deuxième état d'exploitation M2.

11. Convertisseur DC/DC (5) avec une entrée (5.1) pour le raccordement d'un module PV (2) et une sortie (5.2) pour le branchement du convertisseur DC/DC (5) à d'autres modules PV (2) d'un montage en série de modules PV (2) d'une chaîne PV (3), le convertisseur DC/DC (5) étant conçu et configuré
▪ dans un premier mode d'exploitation M1, pour exploiter le module PV (2) qui lui est associé à un point de puissance maximale par une variation dans le temps d'un rapport de transformation de la tension de sortie (Uₐᵤₛ) à la tension d'entrée (Uₑᵢₙ), et
▪ dans un deuxième mode d'exploitation M2, pour exploiter le module PV (2) qui lui est associé avec un rapport de transformation constant dans le temps de la tension de sortie (Uₐᵤₛ) à la tension d'entrée (Uₑᵢₙ), **caractérisé par le fait que** le convertisseur DC/DC (5) est en outre conçu et configuré
▪ pour adopter le deuxième mode d'exploitation M2 en réponse à une signature de courant contenue dans un courant Istr circulant à travers la sortie (5.2) du convertisseur DC/DC (5), la signature de courant étant une courbe temporelle connue du convertisseur DC/DC (5) au préalable sous forme de signal pour le courant I_{Str} à travers la chaîne PV (3).

12. Convertisseur DC/DC (5) selon la revendication 11, **caractérisé par le fait que** le convertisseur DC/DC est conçu comme un convertisseur abaisseur.

13. Installation photovoltaïque (PV) (1) comprenant :
- un générateur PV (4) avec au moins une chaîne PV (3) présentant un montage en série de plusieurs modules PV (2),
- un onduleur (11) relié côté entrée à la chaîne PV (3) et côté sortie à un réseau d'alimentation en énergie (15, EVN), l'onduleur (11) étant conçu et configuré,
▪ pour provoquer une signature de courant dans la chaîne PV (3) en réponse à un signal de déclenchement, et
▪ pour faire varier ensuite, en particulier pendant une deuxième durée Δt₂, une tension U_{Str} de la chaîne PV (3) pour déterminer une courbe caractéristique de la chaîne PV (3),
- une unité de mesure (6) pour détecter les valeurs mutuellement associées pour le courant I_{Str} et la tension U_{Str} de la chaîne PV (3), **caractérisée par le fait qu'**au moins dans la chaîne PV (3), au moins l'un des modules PV (2) est intégré dans le montage en série des modules PV (2) par l'intermédiaire d'un convertisseur DC/DC (5) selon l'une des revendications 11 et 12 et l'installation PV (1) est conçue et configurée pour exécuter le procédé selon l'une des revendications 1 à 10.

14. Installation PV (1) selon la revendication 13, **caractérisée par le fait que** plusieurs, en particulier tous les modules PV (2) de la chaîne PV (3) ou tous les modules PV (2) du générateur PV (4) sont reliés au montage en série des modules PV (2) par un convertisseur DC/DC (5) selon la revendication 11 ou 12.

15. Installation PV (1) selon l'une des revendications 13 et 14, **caractérisée par le fait que** l'unité de mesure (6) est disposée à l'intérieur de l'onduleur (11).

16. Installation PV (1) selon l'une des revendications 13 à 15, **caractérisée par le fait que** l'unité de mesure (6) comporte une unité de communication (12) pour la communication des valeurs de courant Istr et de tension U_{Str} ou est reliée à celle-ci.
